# FASCICULE DE BREVET EUROPEEN

(11) **EP 0 598 664 B1**
(45) Date de publication et mention de la délivrance du brevet: **04.03.1998**
(21) Numéro de dépôt: 93402800.2
(22) Date de dépôt: 17.11.1993
(51) Int. Cl.: F16C 7/02

(54) **Bielle constituée de deux parties assemblées l'une sur l'autre**
Pleuelstange aus zwei Teilen, die aufeinander befestigt sind
Connecting-rod in two parts which are assembled on each other

(30) Priorité: 18.11.1992 FR 9213859
(43) Date de publication de la demande: 25.05.1994
(73) Titulaire: ASCOMETAL, F-92800 Puteaux (FR)
(72) Inventeur: Genouille, Michel, F-91370 Verrieres le Buisson (FR)
(74) Mandataire: Polus, Camille

(56) Documents cités:
- EP-A- 0 330 830
- DE-A- 3 006 240
- DE-C- 357 748
- DE-C- 615 243
- DE-C- 658 462
- FR-A- 718 435
- US-A- 3 822 609
- US-A- 4 369 742

## Description

La présente invention concerne une bielle obtenue par forgeage à chaud ou à froid, notamment de moteur à combustion interne, constituée d'un corps et d'un pied et d'une tête formant chacun un palier destiné à recevoir un coussinet, ladite bielle étant constituée de deux parties qui sont assemblées l'une sur l'autre le long d'une surface de jointure et qui sont bloquées l'une sur l'autre au moyen d'éléments d'immobilisation.

La tête d'une bielle doit être faite de façon à présenter un palier de dimensions appropriées tout en possédant, de préférence, des dimensions permettant le passage de la bielle dans l'alésage du cylindre.

La conception des moteurs à combustion interne à pistons alternatifs comporte divers moyens d'atteindre le plus grand diamètre possible de palier de tête de bielle convenant à une bielle pouvant passer dans l'alésage du cylindre. Les avantages en découlant résident en premier lieu dans le fait que, pour une surface portante appropriée, plus le diamètre du palier sera grand plus sa longueur pourra être courte, ce qui permet de réduire la distance entre cylindres, donc la longueur hors tout du moteur, facteur particulièrement important pour les moteurs en V dans lesquels deux têtes de bielle sont montées sur un maneton commun.

On connaît du FR-A-718 435 une bielle constituée de deux parties symétriques et semblables réunies suivant un plan passant par l'axe longitudinal de ladite bielle, les deux parties de bielle étant réunies de toute façon appropriée.

Les parties de bielle sont obtenues par estampage de façon traditionnelle, c'est-à-dire que la section au niveau du bras de bielle forme un I, du fait que la direction de déplacement de la presse de mise en forme est perpendiculaire au plan principal de la bielle ou encore du plan de l'âme du I.

De plus la réunion des deux parties de bielle comme représentée, c'est-à-dire au moyen de boulons dont l'axe longitudinal est dans le plan principal de la bielle ou parallèle à celui-ci est perpendiculaire à l'axe longitudinal de la bielle, n'assure pas, du fait des contraintes mécaniques de la bielle suivant cet axe de boulon, une tenue mécanique, sans augmenter de façon prohibitive la section desdits boulons et les masses des parties de bielle dans les zones de liaison, ce type de bielle ne résistant pas aux contraintes qu'elles sont susceptibles de supporter.

On connaît plusieurs exemples dans lesquels la surface de jointure réalisant le contact entre le corps de bielle et un chapeau de palier fait un angle oblique avec l'axe longitudinal de la bielle. Outre que ceci donne une bielle étroite par rapport au diamètre du palier, il en résulte une répartition dissymétrique des contraintes entraînant des risques de distorsion en charge ; de plus, les procédés compliqués de mise en place du chapeau et d'élimination de charges de flexion élevées sur les boulons de fixation augmentent les frais de fabrication et le risque d'apparition de zones néfastes de concentration de contraintes.

On est donc fortement incité à réaliser des têtes de bielle fendues à 90°, c'est-à-dire dans lesquelles la surface de jointure réalisant le contact entre la bielle et le chapeau est un plan perpendiculaire à l'axe longitudinal de la bielle, et l'on a expérimenté plusieurs procédés tendant à donner au palier de tête de bielle des dimensions s'accordant avec la possibilité de faire passer la tête de bielle dans l'alésage du cylindre.

Les paliers de bielle connus les plus utilisés fendus à 90° portent généralement sur un coussinet de palier cylindrique en deux parties. Dans ce type de palier, des boulons, fixant la tête de bielle et placés de part et d'autre du coussinet parallèlement à l'axe longitudinal de la bielle, ont des axes dont la distance est maintenue aussi petite que cela est possible sans interférer avec le coussinet.

Une autre solution connue consiste à utiliser quatre boulons de tête de bielle d'assez petit diamètre au lieu de deux boulons d'assez grand diamètre dans les mêmes dimensions externes hors tout, tout en exerçant un effort de serrage plus régulier sur les coussinets de palier.

Les paliers de tête de bielle décrits ci-dessus comportent des éléments d'immobilisation mécanique composés de boulons placés parallèlement à l'axe du corps de bielle et perpendiculairement au coussinet cylindrique, ce qui impose un apport de matière pour l'usinage, sur l'élément semi-cylindrique du corps de bielle et le chapeau de bielle, de méplats permettant l'appui des têtes de boulons et des écrous d'immobilisation.

L'apport de matière, donc de masses destinées à être en mouvement, génère un moment d'inertie qui doit être compensé par des contrepoids placés sur le vilebrequin, à l'opposé de la tête de bielle ou du maneton de vilebrequin.

Les contrepoids d'équilibrage sont placés de façon telle que le centre de gravité de l'ensemble bielle-vilebrequin soit placé sur l'axe de rotation dudit vilebrequin.

L'apport de matière, en masse, nécessaire à la réalisation de passage pour la tige des boulons d'immobilisation et d'appui des têtes de boulon et leurs écrous de serrage oriente les industriels vers la fabrication de bielles et chapeaux de bielle par moulage par fonderie ou par forgeage à chaud.

Le FR-A-2 558 547 décrit une bielle moulée dont le corps présente une section en I, réalisée dans le but de réduire le poids de la bielle sans perte de caractéristiques en résistance des matériaux.

Les procédés de moulage génèrent un problème lié au fait que le corps de bielle (dont l'épaisseur est d'environ 3 à 5 mm) est difficile à mettre en sa forme à cause des effets de refroidissement différentiels qui laissent apparaître des retassures dans la zone de l'âme du corps en I.

Dans ces procédés de moulage la forme est effectuée de manière à ce que l'âme de I soit contenue dans un plan perpendiculaire à l'axe des alésages de palier.

Dans une autre technique, telle que le forgeage à chaud, la bielle ne peut être frappée que dans son plan de symétrie, c'est-à-dire dans le plan diamétral des paliers de tête et de pied de bielle, sans possibilité d'éliminer la masse morte de l'âme du corps de bielle, autrement que par une technique coûteuse d'usinage ou de découpage, le découpage imposant un coup de presse supplémentaire.

De même, dans le cas d'une bielle forgée, l'âme du I est également placée dans un plan perpendiculaire à la direction de forgeage.

Dans le DE-C-658.462, qui décrit un procédé de réalisation selon le préambule de la revendication 1, on a décrit une bielle constituée de deux parties réalisées au moyen d'outils de presse à partir d'un produit plat qui est plié à 90° suivant ses bords, de manière que chacune des parties de bielle ait une section en forme de U dont les ailes repliées sont perpendiculaires aux axes des paliers de la bielle. Les bouts du profil en forme de U sont déformés afin de réaliser le pied et la tête formant palier. Une telle bielle présente des caractéristiques mécaniques inférieures à celles d'une bielle obtenue par forgeage.

On remarque d'autre part que, dans l'ensemble des techniques de réalisation de bielles par forgeage, les formes et les caractéristiques mécaniques sont limitées par le sens traditionnel de mise en forme.

Le but de l'invention est de réduire les masses en mouvement de l'embiellage en lui conservant ses caractéristiques de résistance mécanique, de réduire les déplacement de matières lors de la mise en forme de l'ébauche afin d'assurer sa fabrication par des techniques économiques.

L'invention a pour objet un procédé de réalisation, par déformation au moyen d'outils de presse, d'une bielle comportant un corps et un pied et une tête formant paliers, ladite bielle étant constituée de deux parties et le corps de chacune des parties ayant une section en forme de U, caractérisé en ce que l'on forge à partir d'un lopin chacune des parties de bielle de façon à déplacer le métal par un mouvement des outils de presse perpendiculairement aux axes des paliers de la bielle à former, la section en forme de U du corps de chacune des parties de bielle étant obtenue par forgeage.

Selon une caractéristique de l'invention, on forge chacune des parties de bielle à chaud.

Selon encore une autre caractéristique de l'invention, on forge chacune des parties de bielle à tiède.

Selon encore une autre caractéristique de l'invention, on forge chacune des parties de bielle à froid.

Selon encore une autre caractéristique de l'invention, on forge le pied et/ou la tête de chacune des parties de bielle de façon à réaliser un élément de couronne formant un arc égal ou inférieur à 180°.

L'invention a également pour objet une bielle obtenue par le procédé ci-dessus comportant un corps et un pied et une tête formant paliers destinés à recevoir un coussinet, ladite bielle étant constituée de deux parties qui sont assemblées l'une sur l'autre le long d'une surface de jointure et qui sont bloquées l'une sur l'autre au moyen d'éléments d'immobilisation, les deux parties étant sensiblement symétriques par rapport au plan médian longitudinal de la bielle, et la surface de jointure étant essentiellement disposée dans ledit plan médian longitudinal, les éléments d'immobilisation des deux parties étant situés du côté de la tête de bielle et du côté du pied de bielle, respectivement, le corps de chacune des deux parties comportant une section en U, les ailes du U étant perpendiculaires au plan médian de la bielle.

Cette structure des deux parties constitutives de la bielle permet une fabrication simple en utilisant un outillage unique.

En effet, les deux parties constitutives de la bielle peuvent être obtenues par forgeage à chaud, par forgeage à tiède ou par forgeage à froid.

Selon une autre caractéristique de l'invention, les surfaces de jointure des deux parties comportent deux épaulements en correspondance délimités par le plan médian longitudinal ou un plan parallèle à ce dernier, d'une part, et un plan perpendiculaire audit plan médian longitudinal d'autre part, et les éléments d'immobilisation des deux parties sont constitués chacun par un pion longitudinal formant une clé perpendiculaire à l'axe longitudinal de la bielle et disposé dans deux demi-logements aménagés chacun dans la face de l'épaulement des deux parties jointives qui est perpendiculaire au plan médian longitudinal.

Avantageusement, le pion est une goupille bloquée en translation.

Selon encore une autre caractéristique de l'invention, au moins un élément d'immobilisation est situé sur le corps de bielle, entre la tête de bielle et le pied de bielle.

Selon encore une autre caractéristique de l'invention, les éléments d'immobilisation sont situés aux deux extrémités de la bielle.

Selon encore une autre caractéristique de l'invention, les deux parties, au moins à une de leurs extrémités, côté pied de bielle et/ou côté tête de bielle, sont disjointes et présentent par leur écartement, un degré de liberté de rotation l'une par rapport à l'autre autour de l'axe du pied de bielle et/ou de l'axe de tête de bielle.

Selon encore une autre caractéristique de l'invention, le pied de bielle est en forme de croissant ou de couronne ouverte, dégageant une partie de surface de l'axe du pied de bielle assurant une réduction de longueur de ladite bielle et une réduction de la distance entre l'axe de pied de bielle et le fond du piston.

D'autres caractéristiques et avantages de l'invention ressortiront de la description qui suit d'exemples de mise en oeuvre, faite en se référant aux dessins annexés sur lesquels :
- la figure 1 représente une bielle selon l'invention comportant des éléments d'immobilisation connus;
- la figure 2 est une section selon la ligne 2-2 de la figure 1 ;
- la figure 3 représente un autre exemple de bielle selon l'invention ;
- la figure 4 est une section selon la ligne 4-4 de la figure 3 ;
- la figure 5 présente un autre exemple de bielle selon l'invention.

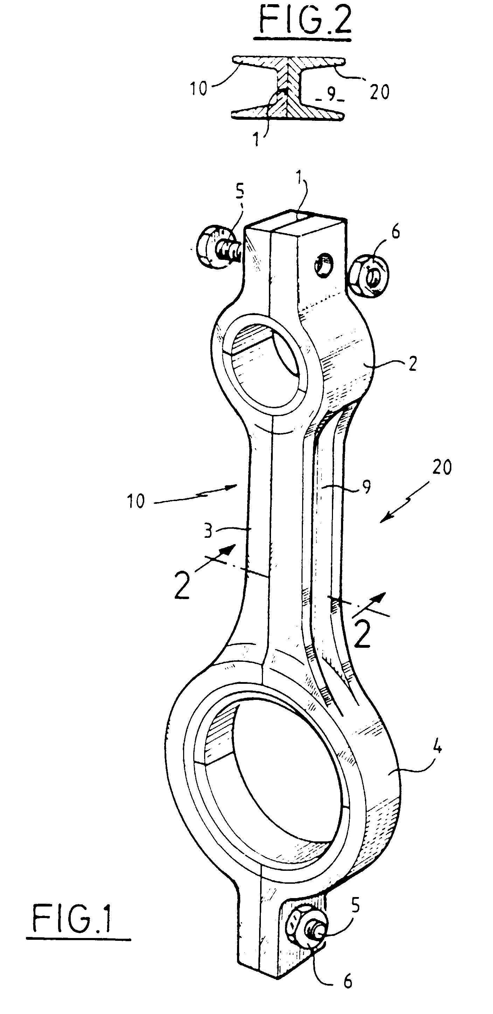

La figure 1 représente une bielle d'un moteur thermique à combustion interne constituée d'un pied 2, d'un corps 3 et d'une tête 4. Cette bielle est liée à un piston, non représenté sur le dessin, au moyen d'un axe de piston, également non représenté sur le dessin, et traversant le palier de l'axe de piston. La bielle longiligne est également liée à un vilebrequin, non représenté, dont un maneton porte un coussinet cylindrique de palier de bielle.

Conformément à l'invention, la bielle est composée de deux parties sensiblement symétriques 10 et 20 disposées de part et d'autre du plan médian longitudinal 1 de la bielle. Les deux parties 10 et 20 constituant la bielle présentent une surface de jointure qui est située dans ledit plan longitudinal médian 1 qui constitue un plan de symétrie de la bielle et qui contient les axes longitudinaux des paliers de tête de bielle et de pied de bielle.

Dans un tel mode de réalisation, un seul outillage de mise en forme, par forgeage à chaud, à tiède ou de forgeage à froid est suffisant pour obtenir les deux parties constitutives de la bielle à l'état brut d'ébauche.

De plus, les deux parties constitutives de la bielle peuvent être forgées ou mises en forme de manière avantageuse en déformant le lopin de base dans le plan diamétral des deux paliers. Ainsi la matière subit presque essentiellement une déformation en flexion traction, sans déplacement important de matière.

On remarque que les deux parties constitutives de la bielle peuvent être obtenues à partir d'un lopin issu de barres parallélépipèdiques.

Plusieurs avantages découlent du fait que la pièce est formée sans déplacement important de matière. En effet, cela permet d'obtenir une pièce comportant un fibrage de très bonne qualité, de réaliser une pièce brute avec une meilleure précision dimensionnelle et de réduire de façon non négligeable les réserves d'usinage.

Comme représenté sur la figure 1, on réalise un évidement 9 dans le corps de bielle 3 par enfoncement dans un plan perpendiculaire au plan médian longitudinal 1 précité de manière à donner au corps de bielle 3, lorsque les deux parties 10 et 20 sont assemblées, une section en H comme représenté à la figure 2. Une telle section peut présenter un moment d'inertie par rapport à l'axe parallèle aux axes longitudinaux des paliers qui soit supérieur au moment d'inertie d'une section en I de type connu.

La limitation des contraintes d'écoulement de matière lors de la mise en forme de l'ébauche permet une réduction de la température de formage, ce qui améliore les caractéristiques métallurgiques de l'acier formé.

Le corps de chacune des deux parties présente une section en U dont les épaisseurs des ailes, obtenues sur l'ébauche, sont réparties pour assurer une distribution de contraintes et choisies de façon que lesdites contraintes lors du fonctionnement de la bielle soient homogènes.

Les deux parties constitutives de la bielle selon l'invention peuvent aussi bien être réalisées à chaud qu'à froid.

Comme on peut le voir sur la figure 1, les deux parties constitutives de la bielle 10 et 20 sont bloquées l'une sur l'autre au moyen d'éléments d'immobilisation qui sont disposés respectivement aux deux extrémités de la bielle du côté du pied 2 et de la tête 4. Dans ce mode de réalisation, les éléments d'immobilisation sont constitués chacun par un boulon 5 et un écrou 6 ; le boulon 5 traverse les extrémités des deux parties constitutives 10 et 20 selon une direction perpendiculaire à l'axe médian transversal 1 précité, et subit une traction lors du fonctionnement de la bielle.

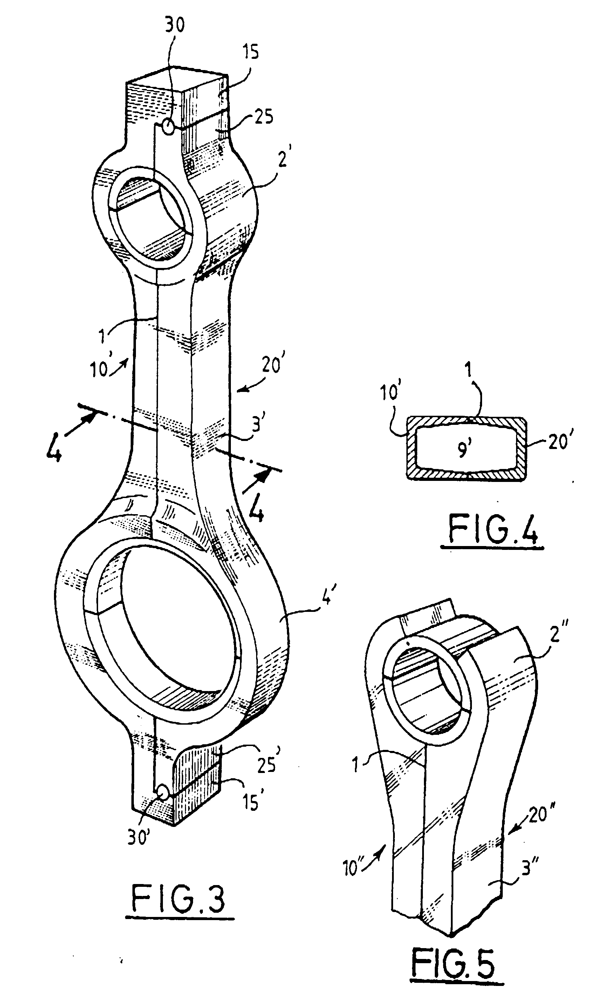

La figure 3 représente un autre mode de réalisation de l'invention dans lequel l'évidement 9' du corps de chacune des parties constitutives 10' et 20' de la bielle est réalisé de façon que sa concavité soit orientée dans la direction opposée des concavités des paliers de la tête 2' et du pied 4' de bielle. Lorsque les deux parties constitutives 10' et 20' sont assemblées en vis-à-vis pour former la bielle, le corps 3' de ladite bielle présente en section la forme d'un caisson ou d'un tube de section quadrangulaire par exemple rectangulaire ou carrée comme représenté à la figure 4. Les caractéristiques mécaniques d'un corps de forme tubulaire assurent, par une diminution de l'épaisseur des parois du tube, une diminution importante du poids de la bielle, tout en favorisant l'inertie.

D'autre part, la liaison entre les éléments de bielle présente une surface de jointure formant un emboîtement. Les deux parties sont immobilisées, par exemple, à leurs deux extrémités, au moyen d'un élément d'immobilisation 30, respectivement 30', constituant une clé supportant les efforts transversaux des paliers.

Dans le mode de réalisation de la figure 3, les surfaces de jointure des deux parties 10' et 20' comportent deux épaulements 15 et 15' qui sont disposés de préférence aux deux extrémités de la bielle. A chaque extrémité de la bielle, l'épaulement d'une des parties est complémentaire de l'épaulement de l'autre partie de manière à réaliser un assemblage par emboîtement.

Dans le mode de réalisation représenté, une des parties, la partie 10' comporte deux épaulements faisant saillie 15 et 15' qui sont délimités par un plan parallèle au plan médian longitudinal et par un plan perpendiculaire à ce dernier. Ces deux épaulements 15 et 15' de la partie 10' viennent donc coiffer l'extrémité 25, respectivement 25', de la deuxième partie 20' qui constitue un épaulement complémentaire délimité par le plan médian longitudinal et le même plan perpendiculaire délimitant l'épaulement 15, respectivement 15'. Sous cette forme l'épaulement est un encastrement qui supporte une partie des efforts lors du fonctionnement de la bielle.

L'élément mécanique d'immobilisation des deux parties 10' et 20' est constitué par un pion longitudinal 30, respectivement 30', qui est parallèle à l'axe du pied de bielle 2', respectivement à l'axe de la tête de bielle 4'. Le pion 30, respectivement 30', est disposé dans un logement constitué de deux demi-logements aménagés chacun dans la face de l'épaulement 15 de la partie 10' qui est perpendiculaire au plan médian longitudinal et dans la face correspondante de la jointure de l'extrémité 25 de l'autre partie 20'. De manière analogue, le pion 30' est logé dans un logement réalisé dans les faces correspondantes de l'épaulement 15' de la partie 10' et de l'extrémité 25' de la partie 20'.

Avantageusement, le pion 30 respectivement 30' est une goupille bloquée en translation.

La clé formant le pion travaille mécaniquement en cisaillement dans un plan diamétral et présente de ce fait une section de cisaillement relativement importante pour un diamètre faible.

La faiblesse de son diamètre est liée au fait qu'en fonction des efforts exercés sur le pied ou sur la tête de bielle, l'encastrement orienté réalisé par l'épaulement assure une partie de la charge.

C'est la faible valeur de ce diamètre qui autorise la réalisation de l'épaulement dans la couronne formée par les paliers.

La bielle selon l'invention ainsi allégée permet la réalisation d'un embiellage dans lequel les contrepoids d'équilibrage, placés sur le vilebrequin, pour compenser l'inertie des masses tournantes de la bielle, peuvent être réduits.

Ainsi l'embiellage selon l'invention assure une diminution en poids des masses tournantes des moteurs à combustion interne. Dans le cas des moteurs diesel, cette diminution de poids peut permettre des régimes de rotation de moteur supérieurs aux normes actuelles.

L'invention permet également une fabrication des deux parties constituant la bielle au moyen d'un seul outillage dans des conditions métallurgiques spécifiques de préférence à basse température.

La description ci-dessus n'a été fournie qu'à titre d'exemples non limitatifs et il est évident que l'on peut y apporter des modifications ou variantes sans pour autant sortir du cadre de la présente invention.

C'est ainsi que l'on peut concevoir des bielles dont le corps présente un profil en H comme représenté sur la figure 1 avec des éléments d'immobilisation constitués par des pions tels que représentés sur la figure 3. On peut également concevoir une bielle dont le corps présente un profil comme représenté à la figure 3 et dans laquelle les éléments d'immobilisation sont constitués par des ensembles de boulon et d'écrou.

Par ailleurs, les épaulements en correspondance peuvent être usinés dans la masse des paliers, aussi bien en extrémité de bielle qu'entre les paliers et le corps de bielle. Le nombre des épaulements peut être également supérieur à deux.

Selon une variante de l'invention, on peut prévoir au moins un élément d'immobilisation situé sur le corps de bielle 3 entre la tête de bielle 4 et le pied de bielle 2.

Dans un mode de réalisation particulier de l'invention représenté sur la figure 5, les deux parties de bielle sont, à au moins une de leurs extrémités, par exemple côté pied de bielle, disjointes et présentent, du fait de cet écartement, un degré de liberté de rotation angulaire, l'une par rapport à l'autre, autour de l'axe, par exemple, du pied de bielle.

Dans ce mode de réalisation, le pied de bielle présente une forme de croissant ou de couronne ouverte de manière à dégager une partie de surface du pied de bielle, ce qui assure une réduction de longueur de ladite bielle et une réduction de la distance entre l'axe du pied de bielle et le fond du piston.

Dans cette forme de l'invention, les deux parties de bielle peuvent être montées de façon aisée dans certains types de moteur. La forme du pied de bielle, en tenaille, autour de l'axe du pied de bielle 2'', ou encore de l'axe du piston nécessite un apport de matière entre pied et corps de bielle pour garantir la rigidité de l'assemblage et sa tenue en fatigue sous les efforts communiqués par le piston.

Elle permet notamment de réduire l'encombrement en longueur de la bielle et de ce fait de pouvoir réduire la distance entre l'axe du piston et le haut du piston.

Cette forme de bielle peut être utilisée pour la fabrication de bielles de technologie classique afin de bénéficier de cet avantage, dans le cas où cette distance est un paramètre critique.

Par bielles de technologie classique, on entend les bielles comprenant une tête de bielle fendue à 90° dans laquelle la surface de jointure réalisant le contact entre la bielle et le chapeau est un plan perpendiculaire à l'axe longitudinal de la bielle. Dans ce cas, le pied de bielle présente la forme représentée à la figure 5, à savoir une forme de croissant ou de couronne ouverte de manière à dégager une partie de surface du pied de bielle.

## Revendications

1. Procédé de réalisation, par déformation au moyen d'outils de presse, d'une bielle comportant un corps (3;3';3") et un pied (2;2';2") et une tête (4;4') formant paliers, ladite bielle étant constituée de deux parties et le corps de chacune des parties ayant une section en forme de U (10,20;10',20';10'',20''), caractérisé en ce que l'on forge à partir d'un lopin chacune des parties de bielle (10,20; 10',20';10",20") de façon à déplacer le métal par un mouvement des outils de presse perpendiculairement aux axes des paliers de la bielle à former, la section en forme de U du corps de chacune des parties de bielle étant obtenue par forgeage.

2. Procédé suivant la revendication 1, caractérisé en ce que le lopin est un lopin obtenu à partir d'une barre de forme parallélépipédique.

3. Procédé selon l'une quelconque des revendications 1 et 2, caractérisé en ce que l'on forge chacune des parties (10,20; 10',20';10",20") de bielle à chaud.

4. Procédé selon l'une quelconque des revendications 1 et 2, caractérisé en ce que l'on forge chacune des parties (10,20; 10',20';10",20") de bielle à tiède.

5. Procédé selon l'une quelconque des revendications 1 et 2, caractérisé en ce que l'on forge chacune des parties (10,20; 10',20';10",20") de bielle à froid.

6. Procédé selon l'une des revendications 1 à 5, caractérisé en ce que l'on forge le pied (2") et/ou la tête de chacune des parties de bielle (10'',20'') de façon à réaliser un élément de couronne formant un arc égal ou inférieur à 180°.

7. Bielle obtenue par forgeage par le procédé selon l'une des revendications 1 à 6, comportant un corps (3;3';3") et un pied (2;2';2") et une tête (4;4') formant paliers destinés à recevoir un coussinet, ladite bielle étant constituée de deux parties qui sont assemblées l'une sur l'autre le long d'une surface de jointure (1) et qui sont bloquées l'une sur l'autre au moyen d'éléments d'immobilisation (5,6;30;30'), les deux parties étant sensiblement symétriques par rapport au plan médian longitudinal (1) de la bielle, et la surface de jointure étant essentiellement disposée dans ledit plan médian longitudinal, les éléments d'immobilisation (5,6;30;30') des deux parties (10,20) étant situés du côté de la tête de bielle (4;4') et du côté du pied de bielle (2;2';2"), respectivement, le corps (3) de chacune des deux parties (10,20) comportant une section en U, les ailes du U étant perpendiculaires au plan médian de la bielle.

8. Bielle selon la revendication 7, caractérisée en ce que les surfaces de jointure des deux parties (10',20') comportent deux épaulements (15,15',25,25') en correspondance délimités par le plan médian longitudinal ou un plan parallèle à ce dernier, d'une part, et un plan perpendiculaire audit plan médian longitudinal d'autre part, et en ce que les éléments d'immobilisation des deux parties sont constitués chacun par un pion longitudinal formant une clé (30,30') perpendiculaire à l'axe longitudinal de la bielle et disposé dans deux demi-logements aménagés chacun dans la face de l'épaulement des deux parties jointives qui est perpendiculaire au plan médian longitudinal.

9. Bielle selon la revendication 8, caractérisée en ce que le pion (30,30') est une goupille bloquée en translation.

10. Bielle selon l'une des revendications 7 à 9, caractérisée en ce qu'au moins un élément d'immobilisation est situé sur le corps de bielle (3), entre la tête de bielle (4) et le pied (2) de bielle.

11. Bielle selon l'une des revendications 7 à 9, caractérisée en ce que les éléments d'immobilisation sont situés aux deux extrémités de la bielle.

12. Bielle selon l'une des revendications 7 à 11, caractérisée en ce que les deux parties (10";20"), au moins à une de leurs extrémités, côté pied de bielle (2") et/ou côté tête de bielle, sont disjointes et présentent par leur écartement, un degré de liberté de rotation l'une par rapport à l'autre autour de l'axe du pied de bielle (2") et/ou de l'axe de tête de bielle.

13. Bielle selon la revendication 12, caractérisée en ce que le pied de bielle (2") est en forme de croissant ou de couronne ouverte, dégageant une partie de surface de l'axe du pied de bielle assurant une réduction de longueur de ladite bielle et une réduction de la distance entre l'axe de pied de bielle et le fond du piston.

## Patentansprüche

1. Verfahren zur Herstellung, durch Umformung mittels Preßwerkzeugen, eines Pleuels, welches einen Körper (3; 3'; 3") und einen Fuß (2; 2': 2'') und einen Kopf (4; 4'), die Lager bilden, aufweist, wobei das Pleuel aus zwei Teilen (10, 20; 10', 20'; 10", 20") gebildet ist und der Körper jedes der Teile einen U-förmigen Querschnitt hat, dadurch gekennzeichnet, daß man ausgehend von einer Luppe jeden der Teile des Pleuels (10, 20; 10', 20'; 10", 20") so schmiedet, daß das Metall durch eine Bewegung der Preßwerkzeuge senkrecht zu den Achsen der Lager des zu bildenden Pleuels verdrängt wird, wobei der U-förmige Querschnitt des Körpers eines jeden der Pleuelteile durch Schmieden gewonnen ist.

2. Verfahren nach Anspruch 1, dadurch gekennzeichnet, daß die Luppe eine aus einer quaderförmigen Stange gewonnene Luppe ist.

3. Verfahren nach irgendeinem der Ansprüche 1 und 2, dadurch gekennzeichnet, daß man jeden der Pleuelteile (10, 20; 10', 20'; 10'', 20'') heißschmiedet.

4. Verfahren nach irgendeinem der Ansprüche 1 und 2, dadurch gekennzeichnet, daß man jeden der Pleuelteile (10, 20; 10', 20'; 10'', 20'') lauwarmschmiedet.

5. Verfahren nach irgendeinem der Ansprüche 1 und 2, dadurch gekennzeichnet, daß man jeden der Pleuelteile (10, 20; 10', 20'; 10", 20") kaltschmiedet.

6. Verfahren nach einem der Ansprüche 1 bis 5, dadurch gekennzeichnet, daß man den Fuß (2, 2') und/oder den Kopf jedes der Pleuelteile (10", 20") so schmiedet, daß ein Kranzelement hergestellt wird, welches einen Bogen von 180° oder weniger bildet.

7. Durch Schmieden nach dem Verfahren gemäß einem der Ansprüche 1 bis 6 gewonnenes Pleuel mit einem Körper (3; 3'; 3") und einem Fuß (2; 2'; 2") und einem Kopf (4; 4'), die Lager zur Aufnahme einer Lagerbuchse bilden, wobei das Pleuel aus zwei Teilen gebildet ist, die längs einer Fugenfläche (1) zusammengefügt sind und aneinander mittels Festlegungselementen (5, 6; 30; 30') festgelegt sind, wobei die beiden Teile in Bezug auf die Längsmittenebene (1) des Pleuels im wesentlichen symmetrisch sind und die Fugenfläche im wesentlichen in dieser Längsmittenebene angeordnet ist, die Festlegungselemente (5, 6; 30; 30') der beiden Teile (10, 20) kopfseitig (4; 4') und fußseitig (2; 2', 2") des Pleuels angeordnet sind, der Körper (3) jedes der beiden Teile (10, 20) einen U-förmigen Querschnitt aufweist, wobei die Schenkel des U senkrecht zur Mittenebene des Pleuels sind.

8. Pleuel nach Anspruch 7, dadurch gekennzeichnet, daß die Fugenflächen der beiden Teile (10, 20) zwei in Entsprechung befindliche Schultern (15, 15', 25, 25') aufweisen, die durch die Längsmittenebene oder eine zu letzterer parallele Ebene einerseits und eine zur Längsmittenebene senkrechte Ebene andererseits bestimmt sind, und daß die Festlegungselemente der beiden Teile jeweils durch einen Längsstein gebildet sind, der einen Schlüssel (30, 30') senkrecht zur Längsachse des Pleuels bildet und in zwei Halbaufnahmen angeordnet ist, die jeweils in der Schulterfläche der beiden aneinanderliegenden Teile ausgebildet sind, die senkrecht zur Längsmittenebene ist.

9. Pleuel nach Anspruch 8, dadurch gekennzeichnet, daß der Stein (30, 30') ein in Translation blockierter Stift ist.

10. Pleuel nach einem der Ansprüche 7 bis 9, dadurch gekennzeichnet, daß wenigstens ein Festlegungselement am Pleuelkörper (3) zwischen dem Pleuelkopf (4) und dem Pleuelfuß (2) angeordnet ist.

11. Pleuel nach einem der Ansprüche 7 bis 9, dadurch gekennzeichnet, daß die Festlegungselemente an den beiden Enden des Pleuels gelegen sind.

12. Pleuel nach einem der Ansprüche 7 bis 11, dadurch gekennzeichnet, daß die beiden Teile (10"; 20") wenigstens an einem ihrer Enden, pleuelfußseitig (2") und/oder pleuelkopfseitig, voneinander getrennt sind und durch ihren Abstand einen Relativdrehfreiheitsgrad um die Achse des Pleuelfußes (2'') und/oder die Achse des Pleuelkopfs aufweisen.

13. Pleuel nach Anspruch 12, dadurch gekennzeichnet, daß der Pleuelfuß (2") in Form eines Halbmonds oder offenen Kranzes ist und einen Teil der Oberfläche der Achse des Pleuelfußes freilegt und eine Verminderung der Länge des Pleuels und eine Verminderung des Abstandes zwischen der Achse des Pleuelfußes und dem Kolbenboden gewährleistet.

## Claims

1. Process for producing a connecting rod, by deformation using pressing tools, said connecting rod comprising a body (3;3';3") and a foot (2;2';2") and a head (4;4') forming bearing surfaces, said connecting rod being made up of two parts (10,20;10',20';10'',20'') and the body of each of the parts having a U-shaped cross section, characterised in that each of the connecting rod parts (10,20;10',20';10'',20'') is forged from a slab in such a way as to displace the metal by a movement of the pressing tools perpendicularly to the axes of the bearing surfaces of the connecting rod which is to be formed, the U-shaped cross section of the body of each of the connecting rod parts being obtained by forging.

2. Process according to claim 1, characterised in that the slab is a slab obtained from a parallelepipedonal bar.

3. Process according to one of claims 1 and 2, characterised in that each connecting rod part (10,20;10',20';10'',20'') is hot-forged.

4. Process according to one of claims 1 and 2, characterised in that each connecting rod part (10,20;10',20';10'',20'') is warm-forged.

5. Process according to one of claims 1 and 2, characterised in that each connecting rod part (10,20;10',20';10'',20'') is cold-forged.

6. Process according to one of claims 1 to 5, characterised in that the foot (2") and/or the head of each of the connecting rod parts (10'',20'') is forged so as to produce a crown element forming an arc less than or equal to 180°.

7. Connecting rod obtained by forging using the method according to one of claims 1 to 6, comprising a body (3;3';3") and a foot (2;2';2") and a head (4;4') forming bearing surfaces adapted to receive a bearing, said connecting rod comprising two parts which are fitted together along a joining surface (1) and which are secured to each other by means of fixing elements (5,6;30;30'), the two parts being substantially symmetrical with respect to the median longitudinal plane (1) of the connecting rod, and the joining surface being substantially located in said median longitudinal plane, the fixing elements (5,6;30;30') of the two parts (10,20) being located beside the head (4;4') and the foot (2;2';2"), respectively, of the connecting rod, the body (3) of each of the two parts (10,20) having a U-shaped cross section, the arms of the U being perpendicular to the median plane of the connecting rod.

8. Connecting rod according to claim 7, characterised in that the joining surfaces of the two parts (10',20') comprise two mating shoulders (15,15',25,25') bounded by the median longitudinal plane or by a plane parallel thereto, on the one hand, and a plane perpendicular to said median longitudinal plane, on the other hand, and in that the fixing elements of the two parts each consist of a longitudinal stud forming a key (30,30') perpendicular to the longitudinal axis of the connecting rod and arranged in two semi-recesses each provided in the surface of the shoulder of the two adjacent parts which is perpendicular to the median longitudinal plane.

9. Connecting rod according to claim 8, characterised in that the stud (30,30') is a pin secured against translational movement.

10. Connecting rod according to one of claims 7 to 9, characterised in that at least one immobilising element is located on the body (3) of the connecting rod, between the head (4) and the foot (2).

11. Connecting rod according to one of claims 7 to 9, characterised in that the immobilising elements are located at both ends of the connecting rod.

12. Connecting rod according to one of claims 7 to 11, characterised in that the two parts (10";20"), at least at one of their ends, beside the foot (2") and/or beside the head of the connecting rod, are separate and by virtue of their spacing have a degree of freedom of rotation relative to each other about the axis of the foot (2") and/or the axis of the head of the connecting rod.

13. Connecting rod according to claim 12, characterised in that the connecting rod foot (2") is in the form of a crescent or an open crown, freeing part of the surface of the axis of the connecting rod foot, thereby reducing the length of said connecting rod and reducing the distance between the axis of the connecting rod foot and the bottom of the piston.
